# EUROPÄISCHE PATENTSCHRIFT

(11) **EP 3 680 003 B1**
(45) Veröffentlichungstag und Bekanntmachung des Hinweises auf die Patenterteilung: **22.09.2021**
(21) Anmeldenummer: 19151084.1
(22) Anmeldetag: 10.01.2019
(51) Int. Cl.: B01D 46/24, B01D 46/42, B01D 46/52

(54) **FILTERPATRONE MIT VENTURI-DÜSE**
FILTER CARTRIDGE WITH VENTURI NOZZLE
CARTOUCHE FILTRANTE POURVUE DE BUSE VENTURI

(43) Veröffentlichungstag der Anmeldung: 15.07.2020
(73) Patentinhaber: Carl Freudenberg KG, 69469 Weinheim (DE)
(72) Erfinder: KLUCK, Stefan, Dr., 68799 Reilingen (DE); SCHULZ, Karsten, 74924 Neckarbischofsheim (DE); SCHUMACHER, Sascha, 69483 Wald-Michelbach (DE)

(56) Entgegenhaltungen:
- DE-U1-202016 005 074
- KR-A- 20140 034 459
- US-B1- 6 638 332
- US-B1- 8 580 004

## Beschreibung

Die Erfindung betrifft eine Filterpatrone gemäß dem Oberbegriff von Anspruch 1.

### Technisches Gebiet

In vielen Bereichen der Technik werden Filterpatronen eingesetzt, beispielsweise um Zuluft oder Abluft zu reinigen und um zu verhindern, dass Partikel in Gebläse, Ventilatoren, Turbomaschinen oder dergleichen gelangen. Dabei werden Filterpatronen von der zu reinigenden Luft durchströmt. Häufig werden Filterpatronen als Entstaubungsfilter eingesetzt. Um eine lange Nutzung der Filterpatronen zu ermöglichen, ist es erforderlich diese regelmäßig abzureinigen. Dies geschieht, indem ein Luftimpuls in umgekehrter Richtung auf die Filterpatrone aufgebracht wird.

Die US 2003/0121238 A1 zeigt Filterpatronen mit Venturidüsen. Zwischen je zwei aneinander montierten Filterpatronen wurde eine Venturidüse angebracht. Die Venturidüse ist dabei im Innenraum der unteren Filterpatrone aufgenommen. In den Ausgestaltungen gemäß der US 8,580,044 B1 und der DE 20 2016 005 074 U1 ist je eine Venturidüse am oberen Ende einer Filterpatrone angebracht. Aufgabe der Venturidüse ist es die Luftführung beim Abreinigen mittels Luftimpuls zu verbessern, genauer: den Druckluftverbrauch für die Abreinigung zu reduzieren. Im Normalbetrieb, wenn die Filterpatronen von zu reinigender Luft durchströmt werden, ist die Venturidüse eher störend. Denn durch die Venturidüse wird der Durchmesser der Öffnung, durch welchen gereinigte Luft austreten kann, in nachteiliger Weise reduziert. Mit der Durchmesserreduzierung einher geht eine Vergrößerung des Druckverlustes. Ein größerer Druckverlust wiederum bedeutet eine geringere Energieeffizienz des Filters.

### Aufgabenstellung

Aufgabe der vorliegenden Erfindung ist es eine Filterpatrone zu schaffen, welche eine höhere Energieeffizienz im Normalbetrieb mit einer guten Abreinigbarkeit verbindet und die Nachteile des Standes der Technik zumindest teilweise behebt.

### Technische Lösung

Gelöst wird diese Aufgabe durch eine Filterpatrone mit den Merkmalen von Anspruch 1.

Die erfindungsgemäße Filterpatrone dient dem Reinigen eines Luftstroms und besitzt einen Boden, einen mit einer mittigen Ausnehmung versehenen Deckel und mindestens ein zwischen Deckel und Boden angeordnetes plissiertes Filterelement. Das Filterelement umhüllt dabei einen Innenraum der Filterpatrone. Erfindungsgemäß weist der Deckel der Filterpatrone eine Venturidüse auf und die Venturidüse greift in das plissierte Filterelement ein. Eingreifen meint dabei nicht, dass die Venturidüse in den Innenraum des Filterelements eingesetzt wird, sondern vielmehr, dass die Venturidüse und das Filterelement ineinander übergehen. Durch diese vorteilhafte Ausgestaltung wird erreicht, dass der von dem Luftstrom im Bereich seiner Ausnehmung durchströmbare Deckel größtmöglich ausgestaltet wird, konkret: dass die durchströmbare Fläche größtmöglich ausgestaltet wird. Durch diese vorteilhafte Strömungsführung des Luftstroms können die durch die vorliegende Engstelle bedingten Druckverluste reduziert werden. Einher mit geringeren Druckverlusten geht eine Erhöhung der Energieeffizienz der Filterpatrone. In anderen Worten: Durch den höheren energetischen Wirkungsgrad der Filterpatrone kann Energie eingespart werden.

Wenn die Filterpatrone im Normalbetrieb betrieben wird, so strömt die Luft durch die Mantelfläche des Filterelements ein, wird dabei gereinigt und strömt durch die Ausnehmung im Deckel wieder aus. Dabei dient die beschriebene Geometrie einer gezielten Strömungsführung. Zusätzlich zum Normalbetrieb wird auch ein Reinigungsbetrieb der Filterpatrone ermöglicht. Dazu wird ein zur Luftführung im Normalbetrieb entgegengesetzter Luftimpuls durch die Filterpatrone geführt.

Wenn nachfolgend von dem einströmseitigen oder dem ausströmseitigen Bereich, beziehungsweise dem einströmseitigen oder dem ausströmseitigen Durchmesser gesprochen wird, so beziehen sich diese Angaben auf die Luftführung im Normalbetrieb.

In der erfindungsgemäßen Filterpatrone ist die Venturidüse im Bereich ihres in das Filterelement eingreifenden Endes kammartig gefächert. Die Venturidüse besitzt im Bereich dieses in das Filterelement eingreifenden Endes eine Vielzahl von Radiallamellen, wobei eine jeweilige Radiallamelle radial um den Innenraum herum angeordnet ist. Die Radiallamellen sind in ihrem einströmseitigen Bereich aufgefächert und in ihrem ausströmseitigen Bereich miteinander verbunden. Eine jeweilige Radiallamelle greift dabei zwischen zwei Falten des plissierten Filterelements ein. Durch diese Ausgestaltung wird in besonders vorteilhafter Weise erreicht, dass das Filterelement direkt in die Venturidüse übergeht und es im Bereich des Übergangs nicht zu einer weiteren Reduzierung der durchströmbaren Fläche des Innenraumes kommt. Bei einer runden Ausgestaltung der Filterpatrone entspricht der Durchmesser der durchströmbaren Fläche so in etwa dem Innendurchmesser des Filterlements.

Die Venturidüse kann einteilig ausgeführt sein. In einer alternativen und fertigungstechnisch günstigen Variante ist der Bereich der Venturidüse, welcher kammartig gefächert ist, als mindestens ein separates Bauteil ausgeführt, welches mit mindestens einem zweiten Bauteil zur Venturidüse zusammengesetzt werden kann.

In einer alternativen und montagetechnisch günstigen Variante ist der Bereich der Venturidüse, welcher kammartig gefächert ist, durch mindestens zwei Bauteile ausgeführt, nämlich als innenliegender und als außenliegender Kamm, wobei das Filterelement zwischen dem innenliegenden Kamm und dem außenliegenden Kamm eingeklemmt ist.

In vorteilhafter Weiterbildung ist die Venturidüse derart ausgeformt, dass sie eine Drosselstelle besitzt und der Drosseldurchmesser im Bereich der Drosselstelle geringer ist als ein einströmseitiger Durchmesser und geringer als ein ausströmseitiger Durchmesser der Venturidüse. Insbesondere können einströmseitiger und ausströmseitiger Durchmesser der Venturidüse gleichgroß sein.

Es wurde als besonders vorteilhaft erkannt, wenn der Drosseldurchmesser der Venturidüse in etwa dem Innendurchmesser des Innenraums im Filterelement entspricht. So können Stufen und Absätze am Übergang vom Filterelement zur Venturidüse vermieden werden, Druckverluste können reduziert und damit die Effizienz der Filterpatrone gesteigert werden.

Die Venturidüse kann in vorteilhafter Weise im Bereich ihres in das Filterelement eingreifenden Endes ein sich verengendes Einlaufprofil und im Bereich außerhalb des Filterelements im ausströmseitigen Bereich ein sich aufweitendes Auslaufprofil aufweisen. Dadurch kann die Luftführung durch die Venturidüse optimiert werden. Das verengende Einlaufprofil kann beispielsweise als gerundetes Profil ausgeführt sein. Das Auslaufprofil kann als sich langsam aufweitendes Auslaufprofil mit einem schrägen Profil ausgeführt sein, zum Beispiel als Auslaufkonus.

Es wurde weiter als vorteilhaft erkannt, die Venturidüse als Norm-Venturidüse auszugestalten, z.B. nach DIN EN ISO 5167.

In vorteilhafter Weiterbildung der erfindungsgemäßen Filterpatrone ist deren mindestens eines Filterelement in eine zylindrische oder kegelstumpfförmige Form gebracht und besitzt im Schnitt senkrecht zur Längsachse der Filterpatrone eine ovale, eine im Wesentlichen runde oder eine kreisrunde Grundfläche. Eine derartige Ausformung des Filterelements ist fertigungstechnisch besonders einfach zu realisieren.

In Weiterbildung der vorbeschriebenen Filterpatrone kann deren mindestens eines Filterelement durch ein Vergussmaterial, z.B. Polyurethan PUR, gegenüber dem Deckel abgedichtet sein. So wird ein Bypass am Übergang von Filterelement zur Venturidüse vermieden und eine hohe Effizienz der Filterpatrone sichergestellt.

In alternativer Ausbildung kann die Venturidüse zumindest im Bereich ihrer kammartigen Auffächerung aus einem elastischen Material sein oder mit einem elastischen Material beschichtet sein, welches eine Abdichtung des Filterlements gegenüber der Venturidüse bewirkt, ohne dass ein zusätzliches Dichtmaterial eingebracht werden muss.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Übersichtsdarstellung einer Vorrichtung zum Filtern mit erfindungsgemäßen Filterpatronen
- Fig. 2: die Venturidüse einer erfindungsgemäßen Filterpatrone in einer Schnittdarstellung
- Fig. 3a: die Venturidüse aus Fig. 2 in einer räumlichen Darstellung
- Fig. 3b: die Venturidüse aus Fig. 3a in einem Teilschnitt
- Fig. 4: eine Filterpatrone gemäß dem Stand der Technik

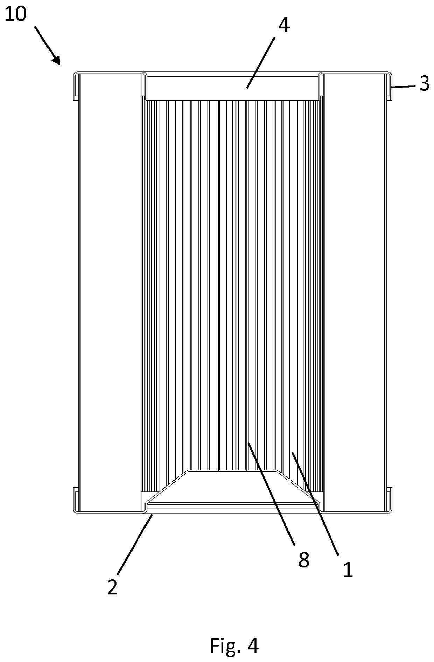

Fig. 4 zeigt eine Filterpatrone 10 gemäß dem Stand der Technik. Zwischen einem Boden 2 und einem eine Ausnehmung 4 aufweisenden Deckel 3 ist ein plissiertes Filterelement 1 angeordnet, welches einen Innenraum 6 (nicht dargestellt) der Filterpatrone 10 umhüllt. Im dargestellten Ausführungsbeispiel besitzt die Filterpatrone 10 eine zylindrische Form und das Filterelement 1 wurde ebenfalls in zylindrischer Form gebracht. Die Darstellung von Fig. 4 zeigt einen Schnitt durch die Filterpatrone 10, sodass sowohl die Falten 8 des Filterelements 1 zu erkennen sind als auch die Faltabschnitte, d.h. die Flächen, welche jeweils zwischen zwei Faltkanten liegen.

Sollte in einer derartigen Filterpatrone 10 die Luftführung verbessert werden durch Verwendung einer üblichen Venturidüse, so würde diese in die Ausnehmung 4 eingesetzt. Dadurch ergibt sich eine weitere Verringerung der durchströmbaren Fläche im Bereich der Ausnehmung 4 und damit im Normalbetrieb ein ungewollter Druckverlust, welcher eine Reduzierung der Filtereffizienz der Filterpatrone 10 bewirkt.

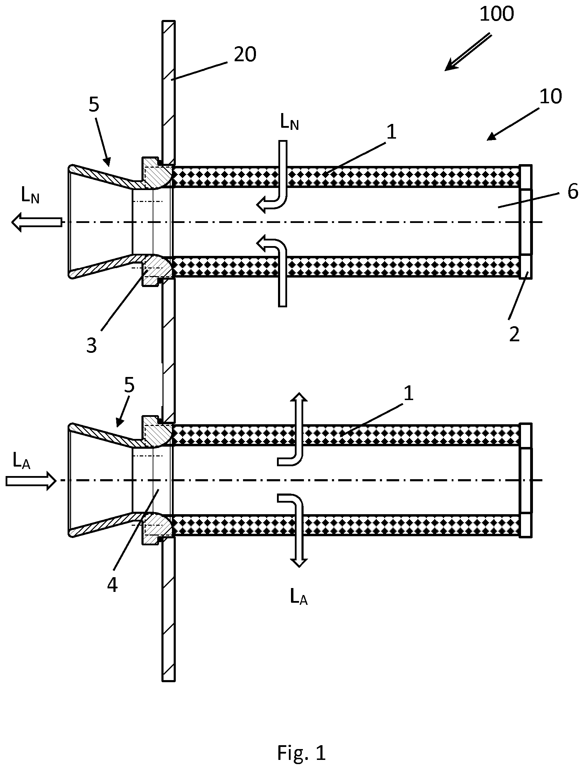

In Fig. 1 ist eine Vorrichtung 100 zum Filtern von Luft dargestellt. In eine Lochplatte 20, d.h. einer Löcher aufweisenden Platte, sind zwei erfindungsgemäße Filterpatronen 10 eingesetzt. Diese besitzen einen Boden 2 und einen Deckel 3 mit einem dazwischen angeordneten Filterelement 1, welches einen Innenraum 6 der Filterpatrone 10 umhüllt. Im Gegensatz zur Filterpatrone 10 gemäß dem Stand der Technik aus Fig. 4 besitzen die erfindungsgemäßen Filterpatronen 10 im Bereich ihres Deckels 3 jeweils eine Venturidüse 5. Wie in der Schnittdarstellung gut zu erkennen, greift die Venturidüse 5 in das Filterelement 1 ein, sodass beide ohne Vorhandensein von Stufen oder Absätzen ineinander übergehen.

Am Beispiel der oberen Filterpatrone 10 wurde die Luftführung L_{N} im Normalbetrieb dargestellt. Anhand der unteren Filterpatrone 10 wurde die Luftführung L_{A} beim Abreinigen der Filterpatrone durch einen Luftimpuls dargestellt. Bei Luftführung L_{N} im Normalbetrieb strömt Luft durch das Filterelement 1 in den Innenraum 6 der Filterpatrone 10 ein und wird dabei gereinigt. Die Luft verlässt die Filterpatrone 10 durch die Ausnehmung 4 in der Venturidüse 5. Durch eine entsprechende geometrische Ausgestaltung der Venturidüse 5 kann die Luftführung L_{N} im Normalbetrieb optimiert werden.

Bei der in gewissen zeitlichen Abständen erforderlichen Reinigung der Filterpatrone 10 erfolgt die Luftführung in umgekehrter Richtung: Ein Luftimpuls L_{A} tritt durch die Venturidüse 5 in den Innenraum 6 der Filterpatrone 10 ein, durchströmt dann das Filterelement 1 und bewirkt dabei ein Abreinigen des Filterelements 1.

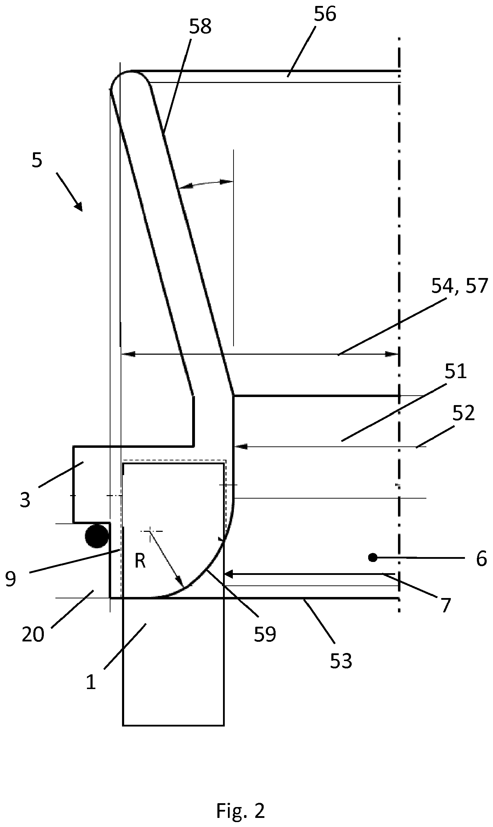

Der Aufbau der Venturidüse 5 und der Übergang vom Filterelement 1 zur Venturidüse 5 ist in der Schnittdarstellung von Fig. 2 detaillierter dargestellt. Die Venturidüse 5 besitzt einen einströmseitigen Bereich 53 mit einem einströmseitigen Durchmesser 54 und einen ausströmseitigen Bereich 56 mit einem ausströmseitigen Durchmesser 57. Zwischen dem einströmseitigen Bereich 53 und dem ausströmseitigen Bereich 56 ist eine Drosselstelle 51 angeordnet, welche einen Drosseldurchmesser 52 aufweist. Dieser bildet die engste Stelle der Venturidüse 5.

Wie in Figur 2 zu erkennen, stellt die Drosselstelle 51 mit dem Drosseldurchmesser 52 also die engste Stelle des Deckel 3 dar. Dabei ist diese Stelle nur unwesentlich enger als der Innendurchmsesser 7 des Filterelements 1.

Im einströmseitigen Bereich 53 besitzt die Venturidüse 5 ein Einlaufprofil 55 mit gerundetem Profil mit einem Radius R. Im ausströmseitigen Bereich 56 besitzt die Venturidüse 5 ein sich langsam aufweitendes, schräges Auslaufprofil 58.

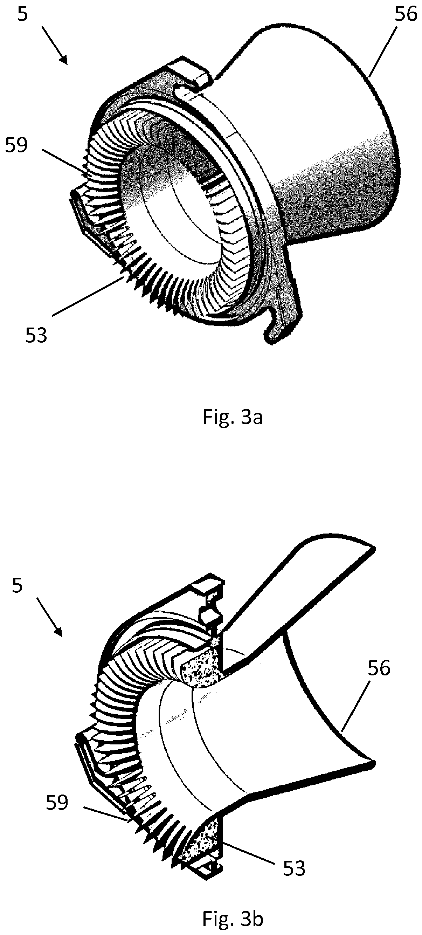

Im einströmseitigen Bereich 53 greift die Venturidüse 5 in das plissierte Filterelement 1 ein. Dazu ist die Venturidüse 5 in diesem Bereich kammartig aufgefächert und besitzt eine Vielzahl von Radiallamellen 59, welche radial zur Mittelachse der Venturidüse 5 im Bereich des einströmseitigen Durchmessers 54 angeordnet sind. Die Auffächerung der Venturidüse 5 durch die Radiallamellen 59 ist auch in den Figuren 3a und 3b dargestellt. Wie zu erkennen ist, sind die Radiallamellen 59 in regelmäßigen Abständen zueinander angeordnet. Dadurch wird ermöglicht, dass eine jeweilige Radiallamelle zwischen zwei Falten 8 des plissierten Filterelements 1 eingreifen kann. In anderen Worten: die der Venturidüse 5 zugeordneten Enden der Faltabschnitte des plissierten Filterelements 1 können zwischen die kammartige Ausformung der Radiallamellen 59 eingeschoben werden.

Um Bypässe zwischen dem Filterelement 1 und der Venturidüse 5 zu verhindern können beide miteinander vergossen werden. In Fig. 2 ist die Lage eines dazu verwendeten Vergußmaterials 9 durch gestrichelte Linien angedeutet.

### Bezugszeichenliste

- 1: Filterelement
- 2: Boden
- 3: Deckel
- 4: Ausnehmung
- 5: Venturidüse
- 6: Innenraum
- 7: Innendurchmesser Filterelement
- 8: Falten Filterelement
- 9: Vergussmaterial
- 10: Filterpatrone

- 20: Lochplatte

- 51: Drosselstelle
- 52: Drosseldurchmesser
- 53: einströmseitiger Bereich
- 54: einströmseitiger Durchmesser
- 55: Einlaufprofil
- 56: ausströmseitiger Bereich
- 57: ausströmseitiger Durchmesser
- 58: Auslaufprofil
- 59: Radiallamelle

- 100: Vorrichtung zum Filtern von Luft

- L_{N}: Luftführung im Normalbetrieb
- L_{A}: Luftführung beim Abreinigen durch Luftimpuls
- R: Radius des gerundeten Einlaufprofils

## Patentansprüche

1. Filterpatrone (10) zum Reinigen eines Luftstroms (L_{N}) mit einem Boden (2), einem mit einer mittigen Ausnehmung (4) versehenen Deckel (3) und mit mindestens einem zwischen Deckel (3) und Boden (2) angeordneten plissierten Filterelement (1), wobei das mindestens eine Filterelement (1) einen Innenraum (6) umhüllt und wobei der Deckel (3) eine Venturidüse (5) aufweist und die Venturidüse (5) in das plissierte Filterelement (1) eingreift,
**dadurch gekennzeichnet, dass**
die Venturidüse (5) im Bereich ihres in das Filterelement (1) eingreifenden Endes kammartig gefächert ist und dass
die Venturidüse (5) im Bereich ihres in das Filterelement (1) eingreifenden Endes eine Vielzahl von Radiallamellen (59) besitzt, welche in ihrem einströmseitigen Bereich aufgefächert und in ihrem ausströmseitigen Bereich miteinander verbunden sind, wobei eine jeweilige Radiallamelle (59) radial um den Innenraum (6) herum angeordnet ist und zwischen zwei Falten (8) des plissierten Filterelements (1) eingreift.

2. Filterpatrone nach Anspruch 1, **dadurch gekennzeichnet, dass**
die Venturidüse (5) eine Drosselstelle (51) besitzt, derart, dass der Drosseldurchmesser (52) geringer ist als ein einströmseitiger Durchmesser (54) und ein ausströmseitiger Durchmesser (56) der Venturidüse (5).

3. Filterpatrone nach Anspruch 2, **dadurch gekennzeichnet, dass** der einströmseitige und der ausströmseitige Durchmesser (54, 56) gleich groß sind.

4. Filterpatrone nach Anspruch 3, **dadurch gekennzeichnet, dass**
der Drosseldurchmesser (51) in etwa dem Innendurchmesser (7) des Innenraums (6) im Filterelement (1) entspricht.

5. Filterpatrone nach einem der vorangehenden Ansprüche, **dadurch gekennzeichnet, dass**
die Venturidüse (5) im Bereich ihres in das Filterelement (1) eingreifenden Endes (53) ein sich verengendes Einlaufprofil (55) und im Bereich (56) außerhalb des Filterelements (1) ein sich aufweitendes Auslaufprofil (58) aufweist.

6. Filterpatrone nach einem der vorangehenden Ansprüche, **dadurch gekennzeichnet, dass**
die Venturidüse (5) als Norm-Venturidüse ausgestaltet ist.

7. Filterpatrone nach einem der vorangehenden Ansprüche, **dadurch gekennzeichnet, dass**
das Filterelement (1) in eine zylindrische oder kegelstumpfförmige Form gebracht ist und im Schnitt eine ovale, im Wesentlichen runde oder kreisrunde Grundfläche besitzt.

8. Filterpatrone nach einem der vorangehenden Ansprüche, **dadurch gekennzeichnet, dass**
das Filterelement (1) durch ein Vergussmaterial (9) gegenüber dem Deckel (3) abgedichtet ist.

## Claims

1. Filter cartridge (10) for cleaning an air stream (L_{N}), having a bottom (2), having a cover (3) which is provided with a central cutout (4), and having at least one pleated filter element (1) which is arranged between the cover (3) and the bottom (2), wherein the at least one filter element (1) encloses an inner space (6), and wherein the cover (3) has a Venturi nozzle (5) and the Venturi nozzle (5) engages into the pleated filter element (1),
**characterized in that**
the Venturi nozzle (5) is fanned out in a comb-like manner in the region of its end which engages into the filter element (1), and **in that**
the Venturi nozzle (5) has a multiplicity of radial fins (59) in the region of its end which engages into the filter element (1), said radial fins being fanned out in their inlet-side region and being connected to one another in their outlet-side region, wherein one respective radial fin (59) is arranged radially around the inner space (6) and engages between two folds (8) of the pleated filter element (1).

2. Filter cartridge according to Claim 1, **characterized in that**
the Venturi nozzle (5) has a throttle point (51) such that the throttle diameter (52) is smaller than an inlet-side diameter (54) and an outlet-side diameter (56) of the Venturi nozzle (5).

3. Filter cartridge according to Claim 2, **characterized in that** the inlet-side and outlet-side diameters (54, 56) are equal in size.

4. Filter cartridge according to Claim 3, **characterized in that**
the throttle diameter (51) corresponds approximately to the inner diameter (7) of the inner space (6) in the filter element (1).

5. Filter cartridge according to one of the preceding claims, **characterized in that**
the Venturi nozzle (5) has a narrowing inlet profile (55) in the region of its end (53) which engages into the filter element (1), and a widening outlet profile (58) in the region (56) outside the filter element (1).

6. Filter cartridge according to one of the preceding claims, **characterized in that**
the Venturi nozzle (5) is designed as a standard Venturi nozzle.

7. Filter cartridge according to one of the preceding claims, **characterized in that**
the filter element (1) is brought into a cylindrical or frustoconical shape and has, in section, an oval, substantially round or circular base surface.

8. Filter cartridge according to one of the preceding claims, **characterized in that**
the filter element (1) is sealed off with respect to the cover (3) by a casting material (9).

## Revendications

1. Cartouche de filtration (10) pour la purification d'un courant d'air (L_{N}), munie d'un fond (2), d'un couvercle (3) pourvu d'un évidement central (4) et d'au moins un élément de filtration plissé (1) agencé entre le couvercle (3) et le fond (2), l'au moins un élément de filtration (1) entourant une chambre intérieure (6), et le couvercle (3) comprenant une buse Venturi (5), et la buse Venturi (5) pénétrant dans l'élément de filtration plissé (1),
**caractérisée en ce que**
la buse Venturi (5) est déployée en éventail à la manière d'un peigne dans la zone de son extrémité pénétrant dans l'élément de filtration (1), et
**en ce que** la buse Venturi (5) présente une pluralité de lamelles radiales (59) dans la zone de son extrémité pénétrant dans l'élément de filtration (1), qui sont déployées en éventail dans leur zone côté entrée et reliées les unes aux autres dans leur zone côté sortie, une lamelle radiale respective (59) étant agencée radialement autour de la chambre intérieure (6) et pénétrant entre deux plis (8) de l'élément de filtration plissé (1).

2. Cartouche de filtration selon la revendication 1, **caractérisée en ce que** la buse Venturi (5) présente un point d'étranglement (51), de telle sorte que le diamètre d'étranglement (52) est plus petit qu'un diamètre côté entrée (54) et un diamètre côté sortie (56) de la buse Venturi (5).

3. Cartouche de filtration selon la revendication 2, **caractérisée en ce que** le diamètre côté entrée et le diamètre côté sortie (54, 56) sont identiques.

4. Cartouche de filtration selon la revendication 3, **caractérisée en ce que** le diamètre d'étranglement (51) correspond approximativement au diamètre intérieur (7) de la chambre intérieure (6) dans l'élément de filtration (1).

5. Cartouche de filtration selon l'une quelconque des revendications précédentes, **caractérisée en ce que** la buse Venturi (5) présente un profil d'arrivée se rétrécissant (55) dans la zone de son extrémité (53) pénétrant dans l'élément de filtration (1) et un profil d'évacuation s'élargissant (58) dans la zone (56) à l'extérieur de l'élément de filtration (1).

6. Cartouche de filtration selon l'une quelconque des revendications précédentes, **caractérisée en ce que** la buse Venturi (5) est configurée sous la forme d'une buse Venturi normée.

7. Cartouche de filtration selon l'une quelconque des revendications précédentes, **caractérisée en ce que** l'élément de filtration (1) est mis sous une forme cylindrique ou tronconique et présente en coupe une surface de base ovale, essentiellement ronde ou circulaire.

8. Cartouche de filtration selon l'une quelconque des revendications précédentes, **caractérisée en ce que** l'élément de filtration (1) est étanchéifié vis-à-vis du couvercle (3) par un matériau isolant (9).
